# FASCICULE DE BREVET EUROPEEN

(11) **EP 4 090 546 B1**
(45) Date de publication et mention de la délivrance du brevet: **14.02.2024**
(21) Numéro de dépôt: 20821330.6
(22) Date de dépôt: 18.11.2020
(51) Int. Cl.: B60K 37/06

(54) **DISPOSITIF DE CONTRÔLE D'ACTIVATION DE FONCTIONS D'UN VÉHICULE**
VORRICHTUNG ZUR STEUERUNG DER AKTIVIERUNG VON FUNKTIONEN EINES FAHRZEUGS
DEVICE FOR CONTROLLING THE ACTIVATION OF FUNCTIONS OF A VEHICLE

(30) Priorité: 15.01.2020 FR 2000350
(43) Date de publication de la demande: 23.11.2022
(73) Titulaire: Stellantis Auto SAS, 78300 Poissy (FR)
(72) Inventeur: FERON, Stephane, 92350 LE PLESSIS ROBINSON (FR); MOTTIER, Romain, 75014 PARIS 14 (FR); DE FRESCHEVILLE, Ghislain, 78000 VERSAILLES (FR); ANNE, Kevin, 78370 PLAISIR (FR); NIELOT, Audrey, 91570 BIEVRES (FR)
(86) Numéro de dépôt international: PCT/FR2020/052105
(87) Numéro de publication internationale: WO 2021/144510

(56) Documents cités:
- EP-A1- 3 249 497
- US-A1- 2002 055 844

## Description

Le domaine technique concerne les dispositifs de contrôle d'activation / désactivation de fonctions électroniques d'un véhicule.

L'invention concerne également les véhicules équipés de tels dispositifs.

La plupart des véhicules automobiles comprennent de nombreux équipements électroniques assurant un ensemble de fonctionnalités ou de tâches participant au confort, au divertissement à bord ou aux assistances à la conduite. Certaines de ces fonctionnalités peuvent activées ou désactivées par un usager du véhicule en fonction de ses préférences. Afin d'activer / désactiver des fonctionnalités, un écran éventuellement tactile est fréquemment utilisé pour afficher un menu permettant à l'usager de ce véhicule d'activer ou de désactiver sélectivement chaque fonction. La présence d'écrans dans les véhicules modernes est mise à profit pour afficher des messages d'information ou d'alertes à l'attention du conducteur. Ainsi, pour signifier l'état indisponible d'une fonctionnalité ou un défaut affectant une telle fonction, la solution communément retenue consiste à afficher un message d'alerte, temporaire ou permanent, sur l'un des écrans à disposition.

Ainsi, la multiplication des écrans et des fonctionnalités augmente considérablement la fréquence de survenance d'une telle alerte. Face à l'augmentation des informations et des alertes à afficher, le document EP0928254 propose une méthode visant à attribuer une priorité aux différents éléments à afficher pour ne sélectionner qu'une partie de ces informations.

Par ailleurs, certaines fonctionnalités avancées, pour être activables, requièrent une ou plusieurs conditions qui ne sont que rarement remplies, de sortes qu'elles sont fréquemment indisponibles. Pour une telle fonctionnalité, le recours à l'affichage d'un message lorsqu'un défaut survient, par exemple lorsqu'un capteur est sale, ou que son état devient indisponible, le risque d'être perçu comme intempestif par le conducteur, d'autant plus si la fonctionnalité est peu souvent disponible. Ainsi, aucune des solutions exposées précédemment n'est satisfaisantes. Le document EP3249497 A1 divulgue la détection d'une première action d'utilisateur comprenant un regard. Au moins un élément de menu parmi une pluralité d'éléments de menu est sélectionné en fonction de l'orientation du regard de la première action d'utilisateur. Une seconde action d'utilisateur est détectée. En fonction de la seconde action de l'utilisateur, une fonction associée à un premier élément de menu donné parmi lesdits premiers éléments de menu est activée.

Le document US2002/055844 A1 divulgue un dispositif électronique portatif comportant un processus de reconnaissance vocale prenant la parole d'entrée d'un utilisateur et produisant une sortie de reconnaissance représentative de la parole d'entrée.

Il existe donc un besoin d'améliorer les solutions existantes d'information aux usagers du véhicule. A cet effet, la présente invention se propose de résoudre les inconvénients cités et de permettre d'informer, au juste nécessaire, le conducteur de l'état des fonctionnalités du véhicule. La présente invention propose un dispositif de contrôle d'activation / désactivation d'au moins une fonction assurée par des équipements électroniques d'un véhicule, le dispositif comprenant un écran propre à afficher au moins un premier menu d'activation / désactivation desdites fonctions et présentant une pluralité d'éléments affichés comprenant, pour au moins une des fonctions, un état de la fonction parmi trois états choisis parmi un état activé, un état désactivé et un état indisponible, correspondant à un état désactivé et indisponible pour l'activation, le dispositif comprenant des moyens de sélection pour sélectionner et activer au moins un élément affiché, caractérisé en ce que lorsque l'état d'une fonction est l'état indisponible, le premier menu est conçu pour afficher un élément associé à ladite fonction indisponible et dont la sélection permet d'afficher une fenêtre d'indisponibilité contenant des informations d'indisponibilité concernant l'état indisponible.

Ainsi, le dispositif selon l'invention comporte un menu permettant d'activer / désactiver les fonctions à travers le premier menu. Lorsqu'une fonction est non activable, ou autrement dit indisponible, le premier menu signale que l'état de la fonction est l'état indisponible. Un usager ayant peu l'habitude d'utiliser ladite fonction indisponible ne remarquera pas cette indisponibilité tandis qu'un usager désirant utiliser la fonction indisponible, en cherchant à l'activer, va naturellement afficher le premier menu. Ce faisant, il constate la présence de l'élément associé à ladite fonction indisponible et, en le sélectionnant, il pourra prendre connaissance des informations d'indisponibilité concernant l'état indisponible affichées dans la fenêtre d'indisponibilité. De ce fait, le dispositif selon l'invention permet d'informer au juste nécessaire l'usager du véhicule en fonction de ses usages et besoins.

Selon un mode de réalisation de l'invention, les informations d'indisponibilité sont affichées uniquement dans la fenêtre d'indisponibilité. L'affichage uniquement dans la fenêtre d'indisponibilité permet d'éviter les messages intempestifs.

Dans un mode de réalisation, la fenêtre d'indisponibilité comporte un deuxième menu permettant de hiérarchiser les informations d'indisponibilité suivant plusieurs catégories comprenant les raisons de l'état indisponible et/ou les actions correctives pour rendre une fonction indisponible activable.

Avantageusement, le premier menu est propre à afficher le nom d'au moins la fonction dont l'état est l'état indisponible, accompagné d'un texte spécifique à cet état indisponible.

Selon un mode de réalisation, l'élément associé est un pictogramme spécifique à l'état indisponible.

Avantageusement, les moyens de sélection permettent de changer l'état d'une fonction dont l'état est activé en l'état désactivé et inversement. Avantageusement encore, l'écran est un écran tactile, les moyens de sélection étant assurés au moins en partie par la fonction tactile de l'écran.

La présente invention concerne également un véhicule caractérisé en ce qu'il comporte un dispositif selon l'invention.

L'invention sera mieux comprise à la lecture de la description détaillée qui va suivre, donnée uniquement à titre d'exemple non limitatif et faite en se référant aux dessins annexés sur lesquels :
[Fig. 1] la figure 1, représente une vue de l'écran d'un dispositif selon l'invention montrant un premier menu ;
[Fig. 2] la figure 2, représente une vue de l'écran d'un dispositif selon l'invention, montrant une fenêtre d'indisponibilité.

Un dispositif 1 de contrôle d'activation / désactivation selon l'invention permet de contrôler l'activation ou la désactivation d'au moins une fonction 2 assurée par des équipements électroniques d'un véhicule selon l'invention, équipé du dispositif 1.

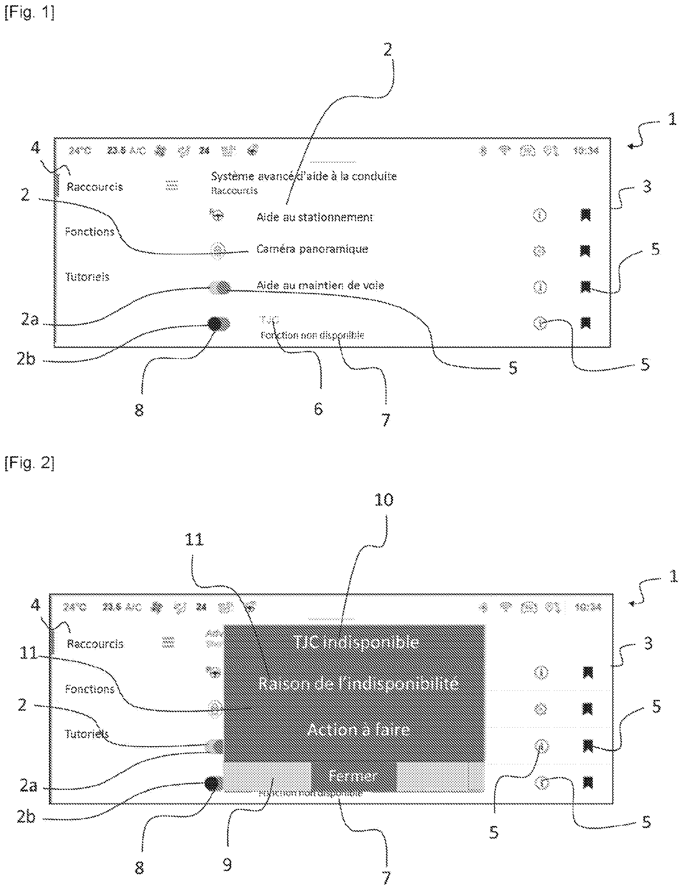

Le dispositif comporte un écran 3, représenté sur la figure 1, propre à afficher au moins un premier menu 4 d'activation / désactivation pour contrôler l'activation ou la désactivation desdites fonctions 2.

Les fonctions 2a activables ou désactivables par le dispositif 1 peuvent être de différentes natures, comme par exemple des fonctions 2a relatives aux divertissements offerts aux passagers à bord du véhicule, des fonctions relatives au confort, comme par exemple des commandes de chauffage ou encore des fonctions 2a liées à la conduite du véhicule et en particuliers aux assistances à la conduite.

Certaines fonctions 2a peuvent être placées par un usager dans un état activé, dans lequel la fonction est opérante ou un état désactivé dans lequel la fonction est inopérante. Il existe également un état indisponible dans lequel la fonction 2b est dans l'état désactivé et dans lequel l'état activé est indisponible, temporairement ou de façon permanente. D'autres fonctions 2 peuvent être contrôlée par le véhicule qui décide de l'état activé ou de l'état désactivé de ces fonctions 2 selon un contexte en cours dans le véhicule ou en dehors de celui-ci. Enfin, certaines autres fonctions 2 peuvent être systématiquement placées dans un état activé lors de chaque mise en fonctionnement du véhicule tout en laissant la possibilité à un usager de les placer dans un état désactivé.

En outre, certaines fonctions 2, pour être activable (c'est-à-dire que l'usager peut les placer dans un état activé), nécessitent la réalisation de plusieurs conditions : c'est le cas par exemple de la fonction d'assistance à la conduite en embouteillage (plus connus sous l'acronyme anglais TJC pour « Traffic Jam Chauffeur ») destinée à délester le conducteur dans des situations de trafic dense ou de bouchon (vitesse inférieure à 50/70 km/h) sur des routes à chaussées séparées (autoroutes et voies rapides). La fonction TJC est capable de maintenir un guidage entièrement automatisé du véhicule sur une période de transition assez longue d'une dizaine de secondes avant un retour vers le mode de conduite manuel, de sorte que le conducteur n'est pas tenu de garder les yeux fixés sur la route et peut vaquer à d'autres occupations. Ainsi, cette fonction TJC nécessite que le véhicule circule sur une route compatible et que des capteurs dédiés ne soient pas sales ou en panne, si bien que cette fonction TJC n'est pas activable systématiquement. Ainsi, l'état de la fonction TJC est fréquemment l'état indisponible et le dispositif 1 est particulièrement adapté à cette fonction TJC.

Le premier menu 4 comporte une pluralité d'éléments affichés 5 dont, pour au moins une fonction 2, l'état de cette fonction 2, choisi parmi l'état activé, l'état désactivé ou l'état indisponible. Le dispositif 1 comporte également des moyens de sélection pour sélectionner et activer au moins un des éléments affichés 5 et pour ainsi permettre à un usager d'effectuer une sélection, pour au moins l'une des fonctions 2a précitées, lorsque cette fonction 2a est activable, parmi l'état activé ou l'état désactivé. Cette sélection s'effectue selon un contexte en cours, pour définir une configuration personnelle de fonctions 2.

Le premier menu 4 est avantageusement propre à afficher le nom 6 de la fonction 2, accompagné d'un texte spécifique 7 dont la couleur peut avantageusement être choisie selon l'état de la fonction 2.

Avantageusement, l'écran 3 du dispositif 1 est tactile et de ce fait comporte donc les moyens de sélection.

Lorsqu'une fonction 2b est dans l'état indisponible, le premier menu 4 est conçu pour afficher un élément associé 8 à ladite fonction 2b, dont la sélection permet d'afficher une fenêtre d'indisponibilité 9, représentée à la figure 2, contenant des informations d'indisponibilité 10 concernant l'état indisponible de la fonction 2b. L'élément associé 8 est par exemple un pictogramme caractéristique d'un état indisponible. La représentation de l'élément associé 8 peut être accompagné, par exemple d'un changement de couleur ou d'un clignotement d'un autre élément affiché 5 et/ou dudit élément associé 8.

Le dispositif 1 est conçu pour que les informations d'indisponibilité 10 soient uniquement affichées dans la fenêtre d'indisponibilité 9.

Cette fenêtre d'indisponibilité 9 comporte avantageusement un deuxième menu 11 permettant de hiérarchiser les informations d'indisponibilité 10 suivant plusieurs catégories : premièrement les raisons de l'état d'indisponibilité et deuxièmement les actions correctives pour rendre la fonction 2b indisponible activable.

Le dispositif 1 selon l'invention permet d'informer au juste nécessaire l'usager du véhicule en fonction de ses usages et besoins, les informations d'indisponibilité 10 étant affichées uniquement dans la fenêtre d'indisponibilité 9. L'affichage uniquement dans la fenêtre d'indisponibilité 9 permet d'éviter les messages intempestifs.

L'invention ne se limite pas au mode de réalisation du dispositif 1 décrit ci-avant, seulement à titre d'exemple, mais d'autres modes de réalisation peuvent être conçus par l'homme de métier sans sortir du cadre et de la portée de la présente invention, définie par les présentes revendications.

## Revendications

1. Dispositif (1) de contrôle d'activation / désactivation d'au moins une fonction (2) assurée par des équipements électroniques d'un véhicule, le dispositif (1) comprenant un écran (3) propre à afficher au moins un premier menu (4) d'activation / désactivation desdites fonctions (2) et présentant une pluralité d'éléments affichés (5) comprenant, pour au moins une des fonctions (2), un état de la fonction (2) parmi trois états choisis parmi un état activé, un état désactivé et un état indisponible, correspondant à un état désactivé et indisponible pour l'activation, le dispositif (1) comprenant des moyens de sélection pour sélectionner et activer au moins un élément affiché (5), **caractérisé en ce que** lorsque l'état d'une fonction (2b) est l'état indisponible, le premier menu (4) est conçu pour afficher un élément associé (8) à ladite fonction indisponible (2b) et dont la sélection permet d'afficher une fenêtre d'indisponibilité (9) contenant des informations d'indisponibilité (10) concernant l'état indisponible.

2. Dispositif (1) selon la revendication 1, **caractérisé en ce que** les informations d'indisponibilité (10) sont affichées uniquement dans la fenêtre d'indisponibilité (9).

3. Dispositif (1) selon la revendication 1 ou 2, **caractérisé en ce que** la fenêtre d'indisponibilité (9) comporte un deuxième menu (11) permettant de hiérarchiser les informations d'indisponibilité (10) suivant plusieurs catégories comprenant les raisons de l'état indisponible et/ou les actions correctives pour rendre chaque fonction (2b) indisponible activable.

4. Dispositif (1) selon l'une des revendications 1 à 3, **caractérisé en ce que** le premier menu (4) est propre à afficher le nom (6) d'au moins la fonction (2b) dont l'état est l'état indisponible, accompagné d'un texte spécifique (7) à cet état indisponible.

5. Dispositif (1) selon l'une des revendications 1 à 4, **caractérisé en ce que** l'élément associé (8) est un pictogramme spécifique à l'état indisponible.

6. Dispositif (1) selon l'une des revendication 1 à 5, **caractérisé en ce que** les moyens de sélection permettent de changer l'état d'une fonction (2) dont l'état est activé en l'état désactivé et inversement.

7. Dispositif (1) selon l'une des revendications 1 à 6, **caractérisé en ce que** l'écran (3) est un écran tactile, les moyens de sélection étant assurés au moins en partie par la fonction tactile de l'écran (3).

8. Véhicule **caractérisé en ce qu'**il comporte un dispositif (1) selon l'une des revendications 1 à 7.

## Patentansprüche

1. Vorrichtung (1) zur Steuerung der Aktivierung/Deaktivierung mindestens einer Funktion (2), die von der elektronischen Ausrüstung eines Fahrzeugs bereitgestellt wird, wobei die Vorrichtung (1) einen Bildschirm (3) umfasst, der mindestens ein erstes Aktivierungs-/Deaktivierungsmenü (4) anzeigen kann der Funktionen (2) und das Präsentieren einer Vielzahl von angezeigten Elementen (5), die für mindestens eine der Funktionen (2) einen Zustand der Funktion (2) aus drei Zuständen umfassen, die aus einem aktivierten Zustand, einem deaktivierten Zustand und ausgewählt werden einen nicht verfügbaren Zustand, der einem deaktivierten Zustand entspricht und für eine Aktivierung nicht verfügbar ist, wobei das Gerät (1) Auswahlmittel zum Auswählen und Aktivieren mindestens eines angezeigten Elements (5) umfasst, **dadurch gekennzeichnet, dass** wenn der Zustand einer Funktion (2b) der Zustand "nicht verfügbar" ist Zustand ist das erste Menü (4) so gestaltet, dass es ein mit der nicht verfügbaren Funktion (2b) verknüpftes Element (8) anzeigt und dessen Auswahl die Anzeige eines Nichtverfügbarkeitsfensters (9) ermöglicht, das Nichtverfügbarkeitsinformationen (10) bezüglich der Funktion enthält nicht verfügbarer Zustand.

2. Gerät (1) nach Anspruch 1, **dadurch gekennzeichnet, dass** die Nichtverfügbarkeitsinformation (10) nur im Nichtverfügbarkeitsfenster (9) angezeigt wird.

3. Gerät (1) nach Anspruch 1 oder 2, **dadurch gekennzeichnet, dass** das Nichtverfügbarkeitsfenster (9) ein zweites Menü (11) umfasst, das eine Priorisierung der Nichtverfügbarkeitsinformationen (10) nach mehreren Kategorien einschließlich der Gründe für die Nichtverfügbarkeit ermöglicht Zustands- und/oder Korrekturmaßnahmen, um jede nicht verfügbare Funktion (2b) aktivierbar zu machen.

4. Vorrichtung (1) nach einem der Ansprüche 1 bis 3, **dadurch gekennzeichnet, dass** das erste Menü (4) in der Lage ist, den Namen (6) mindestens der Funktion (2b), deren Status "Nicht verfügbar" ist, zusammen mit anzuzeigen Spezifischer Text (7) für diesen nicht verfügbaren Status.

5. Vorrichtung (1) nach einem der Ansprüche 1 bis 4, **dadurch gekennzeichnet, dass** das zugehörige Element (8) ein für den Nichtverfügbarkeitszustand spezifisches Piktogramm ist.

6. Vorrichtung (1) nach einem der Ansprüche 1 bis 5, **dadurch gekennzeichnet, dass** die Auswahlmittel es ermöglichen, den Zustand einer Funktion (2), deren Zustand aktiviert ist, in den deaktivierten Zustand zu ändern und umgekehrt.

7. Vorrichtung (1) nach einem der Ansprüche 1 bis 6, **dadurch gekennzeichnet, dass** der Bildschirm (3) ein Touchscreen ist, wobei die Auswahlmittel zumindest teilweise durch die Touchfunktion des Bildschirms (3) gewährleistet sind.

8. Fahrzeug **dadurch gekennzeichnet, dass** es eine Vorrichtung (1) nach einem der Ansprüche 1 bis 7 umfasst.

## Claims

1. Device (1) for controlling activation/deactivation of at least one function (2) provided by electronic equipment of a vehicle, the device (1) comprising a screen (3) capable of displaying at least a first menu ( 4) activation/deactivation of said functions (2) and presenting a plurality of displayed elements (5) comprising, for at least one of the functions (2), a state of the function (2) among three states chosen from a state activated, a deactivated state and an unavailable state, corresponding to a deactivated state and unavailable for activation, the device (1) comprising selection means for selecting and activating at least one displayed element (5), **characterized in that** when the state of a function (2b) is the unavailable state, the first menu (4) is designed to display an element associated (8) with said unavailable function (2b) and the selection of which makes it possible to display a window of unavailability (9) containing unavailability information (10) regarding the unavailable state.

2. Device (1) according to claim 1, **characterized in that** the unavailability information (10) is displayed only in the unavailability window (9).

3. Device (1) according to claim 1 or 2, **characterized in that** the unavailability window (9) comprises a second menu (11) making it possible to prioritize the unavailability information (10) according to several categories including the reasons for the unavailable state and/or corrective actions to make each unavailable function (2b) activatable.

4. Device (1) according to one of claims 1 to 3, **characterized in that** the first menu (4) is capable of displaying the name (6) of at least the function (2b) whose state is I unavailable state, accompanied by specific text (7) for this unavailable state.

5. Device (1) according to one of claims 1 to 4, **characterized in that** the associated element (8) is a pictogram specific to the unavailable state.

6. Device (1) according to one of claims 1 to 5, **characterized in that** the selection means make it possible to change the state of a function (2) whose state is activated in the deactivated state and vice versa .

7. Device (1) according to one of claims 1 to 6, **characterized in that** the screen (3) is a touch screen, the selection means being ensured at least in part by the touch function of the screen ( 3).

8. Vehicle **characterized in that** it comprises a device (1) according to one of claims 1 to 7.
